Europäisches Patentamt

European Patent Office

Office européen des brevets

(11) Veröffentlichungsnummer:

**0 189 511**

**A1**

## (12) EUROPÄISCHE PATENTANMELDUNG

(21) Anmeldenummer: **85105341.3**

(22) Anmeldetag: **02.05.85**

(51) Int. Cl.⁴: **B 62 H 5/00**
**B 60 C 29/00**

(30) Priorität: **06.11.84 DE 3440405**

(43) Veröffentlichungstag der Anmeldung:
**06.08.86 Patentblatt 86/32**

(84) Benannte Vertragsstaaten:
**AT BE CH DE FR GB IT LI LU NL SE**

(71) Anmelder: **Montanplastik GmbH**
**Neckarstrasse 12**
**D-4330 Mülheim/Ruhr 1(DE)**

(72) Erfinder: **Dirks, Siegfried**
**Zechenstrasse 6a**
**D-4354 Datteln(DE)**

(54) Fahrradventil - Sicherung.

(57) Zur Verhinderung mutwilliger Beschädigung von Fahrradventilen wird die Fahrradventil-Sicherung aus zwei Teilen (4,5) gebildet, die sich manuell schutzkorbartig so fest über der Überwurfmutter (2) des Fahrradventils zusammendrücken lassen, daß ein späteres Entfernen nur mittels Werkzeuges möglich wird, wobei ein Spalt (7) zwischen Fahrradventil-Sicherung und Überwurfmutter (2) des Fahrradventils eine ungehinderte Funktion letzterens gewährleistet.

Fahrradventilsicherung. (FVS)

# Beschreibung
## Fahrradventil-Sicherung

Die Erfindung betrifft eine Sicherung von Fahrradventilen
nach dem Oberbegriff des Anspruchs 1.

Sie soll verhindern, daß mutwillig oder fahrlässig Fahrradventile von zeitweilig unbeaufsichtigten Fahrrädern abgeschraubt werden und die Nutzung dieser Fahrräder damit
erschwert wird.

Trotzdem soll ein Nachfüllen der Fahrradventile mittels
Luftpumpe möglich sein.

Es ist bekannt, daß z. B. gem. deutschem GM 79 3o 892 versucht wird, durch eine Bohrung in der Überwurfmutter des
Fahrradventils mit Gewinde für die Aufnahme einer sogenannten Madenschraube zum Kontern der Überwurfmutter dieses
Problem anzugehen.

Wie ferner im deutschen GM 8o o3 349 beschrieben, wird hier
eine Vorrichtung mit konischem Außengewinde und Spannschlitz sowie einer auf diese aufschraubbare Überwurfmutter
mit Gewinde vorgeschlagen.

Auch das deutsche GM 79 1o 631 nennt eine Vorrichtung, die
an den Speichen der Räder, quer zum Ventil, die Überwurfmutter und das Ventil schützen soll.

Für den Vorschlag im GM 79 3o 892 jedoch sind die sich im
Handel befindlichen Überwurfmuttern für Fahrradventile zu
dünnwandig für die Aufnahme einer sog. Madenschraube.

Bei dickwandigeren Überwurfschrauben, die gesondert hergestellt werden müßten, kann beim Einschrauben einer Madenschraube der Ventilsitz sehr leicht verformt werden.

Die Spannvorrichtung gem. GM 8o o3 349 ist ohne jeden
Schutz und kann deshalb schnell und unauffällig abgeschraubt werden.

Schließlich sind die Speichen gem. GM 79 1o 631 so labil, daß
es zu einfach ist, die beschriebene Vorrichtung durch bloßes
Hochziehen vom Ventil in Richtung Radnabe so zu verschieben,
daß das Fahrradventil entwendet werden kann.

- 2 -

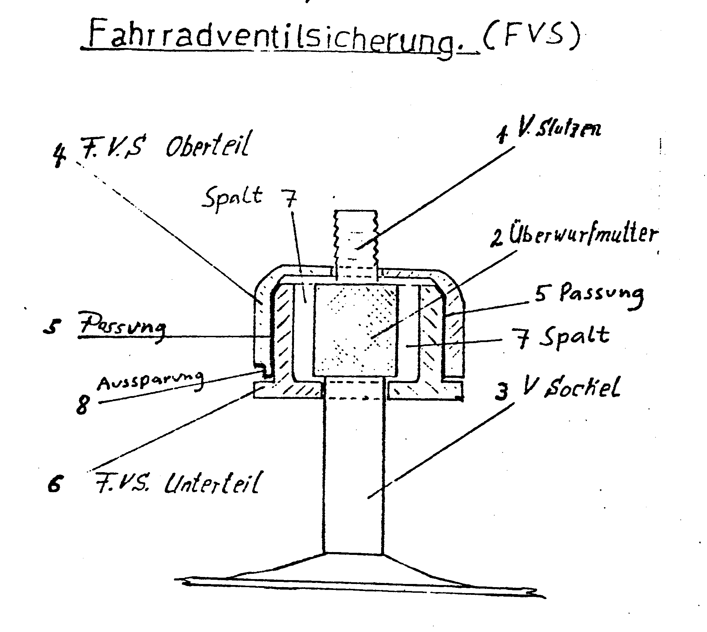

Sämtliche beschriebenen Vorschläge und auch andere konnten
sich wegen dieser Mängel auf dem Markt nicht durchsetzen.
Der Erfindung liegt die Aufgabe zugrunde, durch eine einfache, billig herzustellende Vorrichtung sämtliche bekannten Fahrradventile - ohne diese ändern zu müssen -
nachhaltig zu schützen.
Diese Aufgabe wird erfindungsgemäß dadurch gelöst, daß die
Fahrradventil-Sicherung aus zwei ineinander steckbaren
Hälften besteht, daß beide Teile die Überwurfmutter des
Fahrradventils umfassen und nach Zusammendrücken dieser
beiden Teile das Fahrradventil korbartig und unverrutschbar schützen. Nach Einschnappen bzw. Zudrücken der vorgeschlagenen Erfindung ist ein Entfernen des Fahrradventils
nur unter Zuhilfenahme eines Werkzeuges möglich.
Trotzdem kann jederzeit ein Nachfüllen des Fahrradschlauches
mittels Luftpumpe durchgeführt werden.
Dadurch, daß zwischen der vorgeschlagenen Fahrradventil-
Sicherung und der Überwurfmutter ein Spalt angeordnet ist,
läßt sich die Fahrradventil-Sicherung als Kapsel endlos
drehen, die sich darunter befindliche Überwurfmutter des
Fahrradventils behält jedoch ihren festen Sitz.
Ein manuelles Entfernen oder Beschädigen des Fahrradventils
wird damit verhindert. Zwecks einfacheren Wiederöffnens per
Werkzeug (Schraubenzieher o. ä.) können im Unterteil oder
Oberteil Aussparungen vorgesehen werden, in die das Werkzeug vorbestimmt eingreifen kann.
Ein Ausführungsbeispiel der Erfindung ist in der Zeichnung
dargestellt und wird im folgenden näher beschrieben.

Auf den Fahrradventil-Sockel 3 wird von unten das
Fahrradventil-Sicherungs-Unterteil 6 aufgeschoben, von
oben wird über den Fahrradventil-Stutzen 1 und die
Überwurfmutter 2 das Fahrradventil-Sicherungs-Oberteil 4
eingeführt. Teil 3 und Teil 4 werden manuell bis zum Endstand zusammengedrückt. Sie umfassen jetzt, wie aus der
Zeichnung hervorgeht, die Überwurfmutter 2 korbartig. Aus
der Zeichnung ist der Spalt 7, der eine unterschiedliche
Form aufweisen kann, zweckdienlich jedoch 1 mm Breite aufweisen sollte, ersichtlich. Hierdurch wird ein Festsitzen,
Verkanten o. ä. der Überwurfmutter verhindert und Ihre ungehinderte Funktion ermöglicht. Auch die in der Zeichnung
dargestellte beispielsweise Fassung 5 des FVS-Oberteils 4
sowie des FVS-Unterteils 6 wird eine schlüssige, unbedingt
feste Verbindung dieser beiden Teile erreicht.
Erfindungsgemäß läßt sich diese feste Verbindung auch durch
die Ausbildung der Fahrradventil-Sicherung mittels Nut und
Feder oder durch eine Sicherheitsverschraubung sowie durch
andere an sich bekannte Befestigungsmethoden erreichen.
Ein Entfernen der beschriebenen Fahrradventil-Sicherung
nach Zusammendrücken der Teile 4 und 6 ist nunmehr nur noch
mittels besonderer Werkzeuge möglich. Diese können in vorbestimmte Aussparungen 8 eingreifen. Ein manuelles mutwilliges Beschädigen, Abschrauben o. ä. der Fahrradventile
von zeitweilig unbeaufsichtigten Fahrrädern wird damit verhindert.

1. Fahrradventil-Sicherung, dadurch gekennzeichnet, daß
   die Fahrradventil-Sicherung aus zwei Teilen besteht,
   die beide ineinander geschoben werden und nach Erreichen des Endzustandes die Überwurfmutter des Fahrradventils korbartig umfassen.

2. Fahrradventil-Sicherung nach Anspruch 1, dadurch gekennzeichnet, daß zwischen Fahrradventil-Sicherungs-
   Oberteil mit Fahrradventil-Sicherungs-Unterteil und
   der Überwurfmutter des Fahrradventils ein Spalt vorhanden ist.

3. Fahrradventil-Sicherung nach Ansprüchen 1 und 2, dadurch gekennzeichnet, daß die Reibflächen des Fahrradventil-Sicherungs-Oberteils und Fahrradventil-
   Sicherungs-Unterteils so passungsgenau gestaltet sind,
   daß beide Teile nach dem Zusammendrücken unter Spannung
   nicht mehr von Hand zu trennen sind.

4. Fahrradventil-Sicherung nach Ansprüchen 1 und 2, dadurch gekennzeichnet, daß Fahrradventil-Sicherungs-
   Oberteil mit Nut und Fahrradventil-Sicherungs-Unterteil
   mit Feder oder umgekehrt ausgebildet sind.

5. Fahrradventil-Sicherung nach Ansprüchen 1 und 2, dadurch gekennzeichnet, daß die feste Verbindung zwischen
   Fahrradventil-Sicherungs-Oberteil und Fahrradventil-
   Sicherungs-Unterteil mittels anderer an sich bekannter
   Sicherungseinrichtungen erzielt wird.

6. Fahrradventil-Sicherung nach Ansprüchen 1 und 2, dadurch gekennzeichnet, daß im Fahrradventil-Sicherungs-
   Oberteil und/oder Fahrradventil-Sicherungs-Unterteil
   Aussparungen angeordnet sind.

7. Fahrradventil-Sicherung nach Anspruch 1 und/oder Ansprüchen 3 - 5, dadurch gekennzeichnet, daß das Material
   des Fahrradventil-Sicherungs-Ober- und Unterteils aus
   Kunststoff, Messing oder anderen bekannten Werkstoffen
   besteht.

1/1

# Fahrradventilsicherung. (FVS)

4 F.V.S Oberteil

1 V. Stutzen

Spalt 7

2 Überwurfmutter

5 Passung

5 Passung

7 Spalt

Aussparung

8

3 V Sockel

6 F.VS. Unterteil

## EINSCHLÄGIGE DOKUMENTE

EP 85105341.3

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| D,A | DE - U - 8 003 349 (G. ZEBSKI)<br>* Seite 4, Zeilen 3-10; Ansprüche 2,3 * | 1,5,7 | B 62 H  5/00<br>B 60 C 29/00 |
| D,A | DE - U - 7 930 892 (ROBIN VOLL)<br>* Fig. * | 1,5 | |
| A | DE - A1 - 2 941 923 (ERNO RAUM-FAHRTTECHNIK GMBH)<br>* Ansprüche 1,2; Fig. 1,2,4 * | 1,3,7 | |
| A | DE - A1 - 2 558 098 (MULTIKUNST LEGEPLADSER I/S)<br>* Fig. 3,4 * | 1,3,5-7 | |
| A | DD - A - 206 195 (VEB)<br>* Seite 2, Zeilen 25-34; Fig. * | 1,3,7 | |

| RECHERCHIERTE SACHGEBIETE (Int. Cl.4) |
|---|
| F 16 K 15/00 |
| F 16 K 24/00 |
| F 16 K 27/00 |
| F 16 B 41/00 |
| B 60 C 29/00 |
| B 62 H  5/00 |

Der vorliegende Recherchenbericht wurde für alle Patentansprüche erstellt

| Recherchenort | Abschlußdatum der Recherche | Prüfer |
|---|---|---|
| WIEN | 24-04-1986 | ROUSSARIAN |